(19) Europäisches Patentamt
European Patent Office
Office européen des brevets

(11) **EP 4 140 782 B1**

(12) **EUROPEAN PATENT SPECIFICATION**

(45) Date of publication and mention
of the grant of the patent:
**10.12.2025 Bulletin 2025/50**

(51) International Patent Classification (IPC):
**B60C 23/04** (2006.01)     **B60T 8/172** (2006.01)
**B60W 40/12** (2012.01)

(21) Application number: **21193660.4**

(22) Date of filing: **27.08.2021**

(52) Cooperative Patent Classification (CPC):
**B60C 23/0488; B60T 8/1725; B60W 40/12;**
B60W 2556/45

(54) **A METHOD TO SYNCHRONIZE THE TIME OF A TIRE-MOUNTED SENSOR TO THE ROAD IMPACT AND MEASURE THE CONTACT PATCH DURATION AND AMPLITUDE**

VERFAHREN ZUR SYNCHRONISATION DER ZEIT EINES REIFENMONTIERTEN SENSORS MIT DEM STRASSENAUFPRALL UND ZUR MESSUNG DER DAUER UND AMPLITUDE DER AUFSTANDSFLÄCHE

PROCÉDÉ POUR SYNCHRONISER LE TEMPS D'UN CAPTEUR MONTÉ SUR PNEU AVEC L'IMPACT SUR LA ROUTE ET MESURER LA DURÉE ET L'AMPLITUDE DE LA SURFACE DE CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023 Bulletin 2023/09**

(73) Proprietor: **Bridgestone Europe NV/SA**
**1930 Zaventem (BE)**

(72) Inventors:
• **BABUSCI, Alfredo**
**00128 Roma (IT)**
• **TESTI, Giulio**
**00128 Roma (IT)**

(74) Representative: **Dehns**
**10 Old Bailey**
**London EC4M 7NG (GB)**

(56) References cited:
EP-A1- 3 206 056     WO-A1-2020/128278
US-A1- 2018 222 458     US-A1- 2021 208 029

**Description**

Technical Field

The present invention relates to sensor devices mountable in a tire of a vehicle, such as tire-mounted sensors (TMS) mounted inside a tire. In particular, this invention relates to methods of processing data acquired by an acceleration sensor mounted in a tire at a contact patch.

Background

A sensor mounted inside a tire is generally referred to as a Tire Mounted Sensor (TMS). TMSs are used to monitor some parameters of the tire itself, such as the tire pressure and the tire temperature, as well as extract information on the interaction of the tire with its surrounding environment, such as the road or the vehicle. TMSs typically include an acceleration sensor to monitor wheel speed.

TMSs are typically powered locally, using batteries, and therefore may have a small local memory and CPU capacity. It will be appreciated that tyre revolutions occur very frequently, and therefore, large amounts of data can be acquired by the acceleration sensor in a TMS. In order to preserve battery (ideally such that the battery of the TMS lasts for the lifetime of the tire), data acquisition and any data analysis taking place at the sensor must be optimised for battery life, memory and CPU usage.

It will be appreciated however, that high performance data analysis, with high accuracy and a short processing time, typically uses lots of power, draining the battery.

US 2018/0222458 A1 discloses a road surface condition estimation device which extracts a detection signal of a vibration power generation element during a ground contact section to detect a road surface condition. A threshold used for determination of the ground contact section is variable according to a traveling speed of a vehicle.

One of the parameters which TMSs may measure is the acceleration in the radial direction, using an accelerometer. This data may be used to track the position of the TMS with respect to the road, measure the wheel angular speed, evaluate the load acting on the wheel, or the residual tread depth of the tire in which the TMS is mounted.

Tire mounted acceleration sensors are known from WO2020/128278 A1 and EP3206056 A1.

There remains a need for an improved method of processing data acquired by a TMS to maintain high levels of accuracy when evaluating features of interest in the acceleration data, whilst maintaining low battery usage.

Summary of the Invention

According to a first aspect of the present invention there is provided a method as defined in claim 1.

It will therefore be appreciated that in this method, a dynamic threshold is used to measure the start and end time of an impact signal, and therefore to generate t_patch, which is the difference between the start and end time of the impact signal, t_rev, which is the difference between the start/end of one impact signal and the star/end of the subsequent impact signal, or the ratio between t_rev and t_patch. These are simple mathematical operations which are performed at the sensor, and as such, there is reduced power consumption compared to prior art methods which require more complex mathematical operations. This is particularly advantageous if the sensor which is carrying out the processing is powered by a battery, as it is desirable for the battery to last the lifetime of the tire in which the sensor is mounted. As only the time-related parameter is transmitted to the external server, battery consumption is further reduced, as minimal data is transmitted, and memory is also conserved, as large quantities of acceleration data do not need to be stored by the sensor prior to transmission. This means that the method is well-suited to being run on a processor associated with or embedded within the sensor, while retaining the benefits of real-time information being collected from the tire-mounted sensor (whether the time-related parameter of the impact signal or other evaluated features of the acceleration data).

The impact time (t_patch) may be successfully calculated both for stationary (constant speed) and non-stationary (acceleration) conditions. Further to this, due to the dynamic threshold, the method in accordance with the present invention may easily adapt to different conditions, e.g. different road, vehicle, load, speed, tire conditions, etc.

The transmitted data may be used to track the position of the sensor in the tire with respect to the road or measure the wheel angular speed. The external server may perform further processing on the transmitted data to extract additional characteristics such as the load on the tire, or wear characteristics such as the residual tread depth of the tire. There is no need to "train" the method using data prior to installation of the acceleration sensor, such that tires which have the sensor pre-installed may also use the method described above (for example provided by a firmware update) to extract useful information from the acceleration data. The method described above may be implemented on a sensor mounted in a tire of any passenger or commercial vehicle, such as a truck, bus, SUV etc.

The method provides acceleration data across multiple impact signals and, using the transmitted time-related parameter, vehicle speed evaluation at every wheel revolution may be easily achieved.

The acceleration data can be processed to assess how the impact of the contact patch with the road changes the acceleration values before and after each impact signal. In some embodiments the method further comprises: processing the acceleration data to measure acceleration values between impact signals and calculate an inter-impact peak acceleration value (a_max). Typically, a_max is located locally to the impact signal in the acceleration data described above. In at least some embodiments, a_max is obtained for every revolution of the tire and is not obtained using a running average, unlike avg_a_min.

In some embodiments the method further comprises: adjusting the dynamic threshold dependent on the inter-impact peak acceleration value (a_max). The dynamic threshold is therefore dependent on two parameters: a_max and avg_a_min, where avg_a_min is a running average, and a_max is obtained for every revolution of the tire. Using two parameters to adjust the dynamic threshold ensures that the dynamic threshold is more sensitive to changes in acceleration data caused by changing conditions, and that the time-related parameters extracted using the dynamic threshold will be accurate even when the acceleration data varies.

In some embodiments the dynamic threshold comprises a first dynamic threshold used to measure the start time of the impact signal and a second (preferably different) dynamic threshold used to measure the end time of the impact signal. In various embodiments the first and second dynamic thresholds each vary dependent on avg_a_min and a_max, but according to different functions, such that the first and second dynamic thresholds will have different values. It is advantageous to use two different thresholds to measure the start time and end time, respectively, of the impact signal as the impact signal may not be fully symmetrical, and the two thresholds will therefore provide a more accurate method to determine the start and end times of the impact signal.

In some embodiments the first dynamic threshold is calculated as a function of the running average avg_a_min and a_max, the function including a factor x to bias the threshold value towards avg_a_min. In some embodiments the second dynamic threshold is calculated as a function of the running average avg_a_min and a_max, the function including a factor y (different to factor x) to bias the threshold value towards a_max.

In some embodiments the minimum dynamic threshold is calculated as a function of: the running average avg_a_min; a_max; and a factor x, wherein x is a fixed value satisfying $0<x<1$. An example of a function which is used to determine the first dynamic threshold is:

$$\text{First dynamic threshold} = (1-x)^* \text{avg\_a\_min} + x^* \text{a\_max}$$
$$\approx \text{avg\_a\_min} - (\text{a\_min} - \text{a\_max})^* x$$
$$= \text{avg\_a\_min} - \text{amplitude}^* x$$

Where avg_a_min is the running average of the impact peak acceleration value, and a_min is the impact peak acceleration value for the current impact signal. It will be appreciated that alternative threshold calculations may be used instead of the functions shown above. The threshold calculation shown above is very simple and will therefore require minimal computational power, and therefore will not drain the battery significantly, increasing the battery lifetime.

In some embodiments the second dynamic threshold is calculated as a function of: the running average of avg_a_min; a_max; and a factor y, wherein y is a fixed value satisfying $0 < y < 1$ and $y \neq x$. For example:

$$\text{Second dynamic threshold} = (1-y)^* \text{avg\_a\_min} + y^* \text{a\_max}$$
$$\approx \text{avg\_a\_min} - (\text{a\_min} - \text{a\_max})^* y$$
$$= \text{avg\_a\_min} - \text{amplitude}^* y$$

Wherein the amplitude is defined as a_min - a_max i.e. the total displacement of the acceleration data for that impact signal. As with the minimum dynamic threshold, alternative calculations may be used.

The threshold calculations shown above are quite simple and will therefore require minimal computational power, and therefore will not drain the battery significantly, increasing the battery lifetime.

In some embodiments the method further comprises: processing the acceleration data to measure acceleration values between impact signals and calculate an average acceleration value between impact signals as a g-value. This g-value will be equal to the centrifugal acceleration of the sensor for an ideal tire (i.e. if there was no deformation of the tire with the surface of the road). The acceleration data may be converted into the g-value using a calibrated lookup table.

In some embodiments the method further comprises: checking whether the generated time-related parameter is valid by comparing the value of g-value*( t_rev)^2 to an expected error value range. The expected error range may comprise two calibrated thresholds, and if t_rev is within these two thresholds, it is considered valid; otherwise it is considered invalid. In this way, if t_rev is not valid, the data acquired for that revolution of the tire may be discarded.

In some embodiments the method further comprises: measuring a zero-g value for the tire by processing the acceleration data to measure acceleration values when the tire is not moving; and processing the acceleration data, for each impact signal, to measure a zero offset in the acceleration values, which is calculated as the difference between the running average of the peak acceleration value (avg_a_min) and the zero-g value. The zero-g value is therefore equal to the background acceleration which is always experienced by the acceleration sensor, i.e. the acceleration due to gravity. The zero-g value may also be chosen as the starting value for determining avg_a_min prior to any acceleration data or impact signal being received by the acceleration sensor. The zero-offset parameter may be transmitted to an external server, where it may be further used in processing to determine load and/or wear of the tire.

In some embodiments the difference between the impact peak acceleration value (a_min) and the inter-impact peak acceleration value (a_max) is averaged over a plurality of revolutions of a tire to measure a contact patch amplitude (a_patch), and the contact patch amplitude is transmitted to the external server. The contact patch amplitude may therefore be equal to the maximum displacement of the acceleration data from the average g-value between impact signals. As the difference between a_min and a_max will be obtained for each impact signal in each revolution of the tire, averaging over a plurality of revolutions will provide a more precise and accurate value for the contact patch amplitude, as it takes into consideration multiple revolutions of the tire. Further to this, averaging over multiple revolutions reduces the frequency of data transmission, therefore reducing memory and power consumption in the sensor. The transmitted contact patch amplitude may be further used at the server e.g. for load/wear/speed calculations for the tire.

In some embodiments the method further comprises: processing the acceleration data, for each impact, to determine the slope of at least one of the leading edge and trailing edge of the impact signal. The differential with respect to time of the acceleration data may be determined for each impact, and the maximum and minimum value of this differential determined to assess the slope. The slope of the impact signal before and after the impact peak may be used to estimate the wear of a tire. For example, a higher slope may correspond to a worn tire whereas a lower slope may correspond to a new tire.

In some embodiments the method further comprises: transmitting to the external server an amplitude-related parameter for each impact chosen from one or more of: the impact peak acceleration value (a_min), the inter-impact peak acceleration value (a_max), the slope, and the difference between a_min and a_max. Transmitting the amplitude-related parameter(s) instead of all the acceleration data acquired by the sensor also reduces battery consumption in the sensor as there is a reduction in the quantity of data which is transmitted, reducing transmission bandwidth. Memory is also conserved, as large quantities of acceleration data do not need to be stored by the sensor prior to transmission.

In some embodiments the method further comprises: receiving the amplitude-related parameter at the external server and using the amplitude-related parameter to determine tire wear. Methods of determining tire wear from an amplitude-related parameter are known in the art. For example, US2021/0208029 (Bridgestone Corp.) describes a method for estimating a degree of wear of a tire from magnitudes of peaks appearing in a radial acceleration waveform obtained by differentiating tire radial acceleration detected by an acceleration sensor.

In at least some embodiments, the amplitude-related parameter is used to determine or predict residual tread depth of the tire as an indicator of wear. As explained above, the slope may be used to determine the wear of a tire, as older tires will have less remaining tread depth and the tires will therefore be less resistant to deformation with the surface on which they are rolling. WO2009/008502 (Bridgestone Corp.) describes differentiation of the waveform of the detected acceleration to assess the deformation speed of the tread, which depends on the degree of tire wear. In addition to wear assessment, one or more amplitude-related parameters may be used to determine the load on the tire, the speed of the vehicle, or other information related to the interaction of the tire with the surrounding environment, such as the road or the vehicle.

In at least some embodiments, the method comprises: transmitting to the external server at least one time-related parameter and at least one amplitude-related parameter. For example, US2021/0208029 (Bridgestone Corp.) describes how the degree of wear of a tire is estimated using the slope of the impact signals (differential of the radial acceleration values) and the ground contact time ratio.

In some embodiments the method further comprises: receiving the time-related parameter at the external server and using the time-related parameter to determine one or more of: (i) tire load; (ii) vehicle centre of gravity; and (iii) rotational speed of the tire. For example, t_rev, the revolution time of the tire, may be used to determine the rotational speed of the tire, as the diameter of the tire will be known. The vehicle centre of gravity may be determined using the ratio between t_rev and t_patch, as this ratio will vary depending on how the vehicle is loaded, and therefore how each tire is affected by the load it bears.

In some embodiments the method further comprises: filtering the acceleration data from multiple revolutions of the tire using a moving average filter of length N (e.g. N=8 samples, e.g. N=16 samples) before the processing steps of the present invention. This filter will "smooth" the acceleration data, as the acceleration data will also have vibrational noise, which may be minimised through the filtering of the acceleration data. This filtering will also reduce the amount of data which may be stored at the sensor. Filtering the data makes the data which is processed less noisy, leading to more accurate calculations which may then be used to determine characteristics of the tire.

In some embodiments the acceleration data is stored in a memory at the sensor prior to processing at the sensor.

In this way, the acceleration data may be processed less frequently, reducing the power consumption compared to processing at a more frequent rate.

In some embodiments the time-related parameter and/or amplitude-related parameter is stored in a memory at the sensor prior to transmission. Again, through reducing the frequency of data transmission, the power consumption from transmission is reduced, for example extending the lifetime of a battery that powers the sensor. For example, a transmitter which is used to transmit the time- or amplitude-related parameters to the external server may go into a "sleep mode" following transmission in order to conserve power, with the transmitter only waking occasionally to transmit the stored data from the memory.

In any of the embodiments disclosed above, the method is a computer-implemented method.

It will be appreciated that the methods in accordance with embodiments of the present invention may be implemented at least partially using firmware or software. It will thus be seen that the present invention extends to a computer program product comprising computer-readable instructions executable to at least partially perform any or all of the methods described herein, e.g. when executed on suitable data processing means, in particular a processor associated with or embedded in the acceleration sensor.

According to a second aspect of the present invention there is provided a tire-mounted sensor system as defined in claim 14.

In one or more embodiments of the tire-mounted sensor system, the processor is configured to carry out any of the method steps already described above.

Brief description of the drawings

One or more non-limiting examples will now be described, by way of example only, and with reference to the accompanying figures in which:

Figure 1 is a schematic drawing of a tire in which an acceleration sensor is mounted;
Figure 2 is a diagram of acceleration data acquired by the sensor of Figure 1 as a function of time, showing the impact signal induced in the acceleration data;
Figure 3 is a schematic illustration of the components of the tire-mounted sensor and server;
Figure 4 is a block diagram, illustrating the steps which occur in the processor to process the data acquired by the acceleration sensor of the TMS;
Figure 5 is a diagram of raw acceleration data acquired by the TMS of Figure 1 as a function of time;
Figure 6 is a diagram of the FSM which is used in Figure 4 to determine the t_start and t_end of the impact signal;
Figure 7A is a diagram of acceleration data for a single revolution of a fully worn tire, with a full load, travelling at 30 km/h;
Figure 7B is a diagram of acceleration data for a single revolution of a fully worn tire, with a full load, travelling at 60 km/h;
Figure 8A is a diagram of acceleration data for a single revolution of a fully worn tire with a full load, travelling at 60 km/h;
Figure 8B is a diagram of acceleration data for a single revolution of a new tire with 100% remaining tread depth, with a full load, travelling at 60 km/h;
Figure 9 is a diagram of acceleration data for a fully worn tire with no load over multiple revolutions of the tire.

Detailed description of preferred embodiments

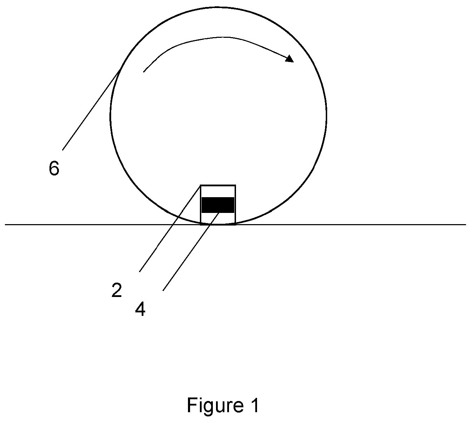

Figure 1 shows a tire-mounted sensor (TMS) 2, which comprises an acceleration sensor 4, such as an accelerometer, the tire-mounted sensor 2 being designed to monitor properties of a tire 6, when mounted in a tire 6, or on an inner surface of the tire 6.

When the TMS 2 is mounted on the inside of the tire 6, it will rotate together with the tire 6, and the contact between the tire 6 and the ground 8 will result in a deformation of the tire 6, at the portion of the tire 6 in contact with the ground 8. This is commonly referred to as the "contact patch" of the tire 6.

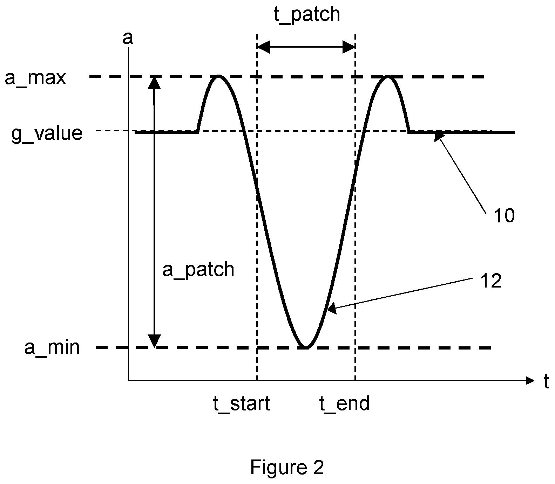

The accelerometer 4 may be used to measure the acceleration in the radial direction of the tire 6. When the portion of the tire 6 to which the sensor module 2 is mounted is in contact with the ground 8 (the contact patch), an impact signal will be introduced in the acceleration data generated by the accelerometer 4, as shown in Figure 2.

Figure 2 shows an idealised diagram of acceleration data 10 acquired by a TMS as a function of time, showing an impact signal 12 induced in the acceleration data 10 for one revolution of a tire fitted with a TMS. The impact signal 12 has a peak acceleration value (a_min). Before, and after the impact signal 12 (and local to the impact signal 12), there is a small peak in the opposite direction to the impact signal 12, an inter-impact peak acceleration value (a_max). Aside from a_max local to the impact 12, between impact signals, the acceleration data has a constant value (g_value). The impact signal 12 has a leading edge leading from the g_value between impacts to the peak of the impact signal at a_min, and then a trailing edge from a_min back to the g_value. In this example the impact signal is shown as a downwards peak in the acceleration data, but the direction of the y-axis representing acceleration values can be flipped.

The amplitude of the impact signal 12 is defined as the difference between a_min, and a_max, i.e. the maximum total displacement of the signal from the g_value. The duration of the impact signal (t_patch), which is equivalent to the period of time over which the portion of the tire containing the TMS is in contact with the road is defined as the time between a first threshold level of the leading edge (t_start), and a second threshold level of the trailing edge (t_end) of the impact signal 12. The method of calculating these thresholds will be explained in further detail with relation to subsequent drawings below. Although only one impact signal is shown in Figure 2, it will be appreciated that, typically, tires make multiple revolutions, and as such, there would be multiple impact signals 12. The time between one impact signal 12 and the next impact signal 12 gives the time of revolution of the tire.

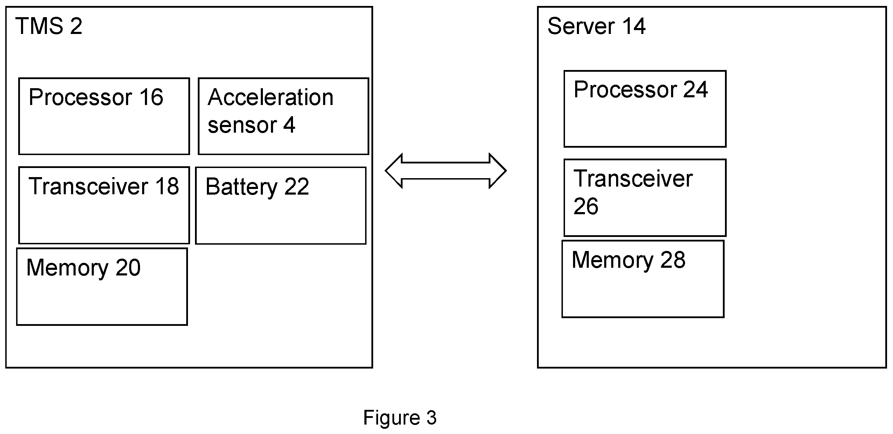

Turning now to Figure 3, a schematic illustration of the components of the tire-mounted sensor 2 of Figure 1 is shown, along with the components of an external server 14 which the TMS 2 is in communication with. The TMS 2 comprises an acceleration sensor 4, such as an accelerometer, a processor 16, transceiver 18, memory 20, and battery 22. The external server 14 comprises a processor 24, transceiver 26, and memory 28.

The acceleration sensor 4 may be used to acquire radial acceleration data for the TMS 2. This data may then be passed to the transceiver 18 to be transmitted, to the processor 16 to be processed and then transmitted by the transceiver 18, or to the memory 20 to be stored and processed or transmitted later by the processor 16 and transceiver 18.

The transceiver 18 of the TMS 2 may, for example, be a radio transceiver configured to send acceleration data acquired by the acceleration sensor 4 to the external server 14. The transceiver 18 may also be configured to send acceleration data which has been processed by the processor 16 to the external server 14. The server may then use this raw or processed data to determine characteristics related to the tires/vehicle, such as speed, load, tread depth etc.

The TMS 2 may establish a "mobile" or telecommunications network connection with the server transceiver 26 of the external server 14 through a network service provider. The network connection can be established in a known manner, utilising any number of communication standard such as LTE (4G), GSM (2G & 3G), CDMA (2G & 3G), WAN, ISM band 433 MHz, BLE, 315 MHz, 433 MHz, FSK, 5G etc.

The TMS 2 is powered by the battery 22, the external server 14 will be powered by an external power source (not shown). Alternatively, the TMS 2 may be powered by an energy harvesting device, which harvests energy from the movement of the tires.

The processor 16 may be used to determine time- and/or amplitude- related parameters for the acceleration data collected by the acceleration sensor 4, such as: the duration of an impact signal (t_patch), the time between two consecutive impact signals (t_rev), a ratio between the duration (t_patch) and the time period (t_rev), the impact peak acceleration value (a_min), the inter-impact peak acceleration value (a_max), the slope of the leading and/or trailing edge of the impact signal, and the difference between a_min and a_max (i.e. representing the contact patch amplitude (a_patch)).

These time- and/or amplitude- related parameters may then be transmitted to the server 14, which may perform further processing to determine characteristics of the tire/vehicle.

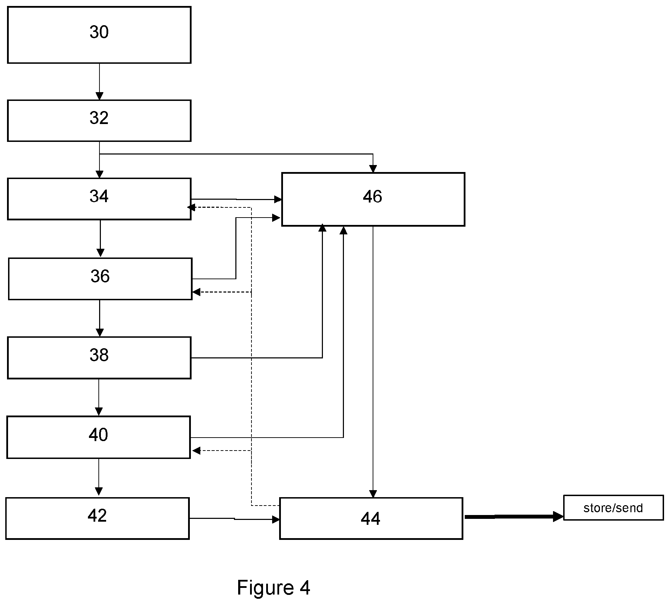

Turning now to Figure 4, a block diagram is shown, illustrating the steps of which may occur in the processor 16 to process the data acquired by the acceleration sensor 4 of the TMS 2. The processing steps may be performed immediately following acquiring the data, reducing the amount of data which is stored in the memory 20, as well as enabling information relating to the impact time and other features evaluated through processing to be provided more rapidly, than if processing is only performed at the external server 14.

When the TMS 2, comprising an acceleration sensor 4, is mounted on the inner lining of the tire 6, and the tire 6 begins to roll along a surface, the sensor 2 also begins to spin about the tire centre. This spinning movement produces a centrifugal acceleration in the z-axis direction that can be measured using the acceleration sensor 4 at block 30, with this data then converted to digital samples by means of an Analogue-to-Digital converter system at block 32. An ideal, non-deformable tire will undergo no deformation and will only measure this centrifugal acceleration during rotation of the tire. However, as explained above, a real tire undergoes deformation on the portion of the tire (the contact patch) in contact with the surface. This deformation can be shown in the data acquired by the sensor as an impact signal (shown in Figure 2) when the portion of the tire 6 to which the sensor 2 is mounted contacts the surface.

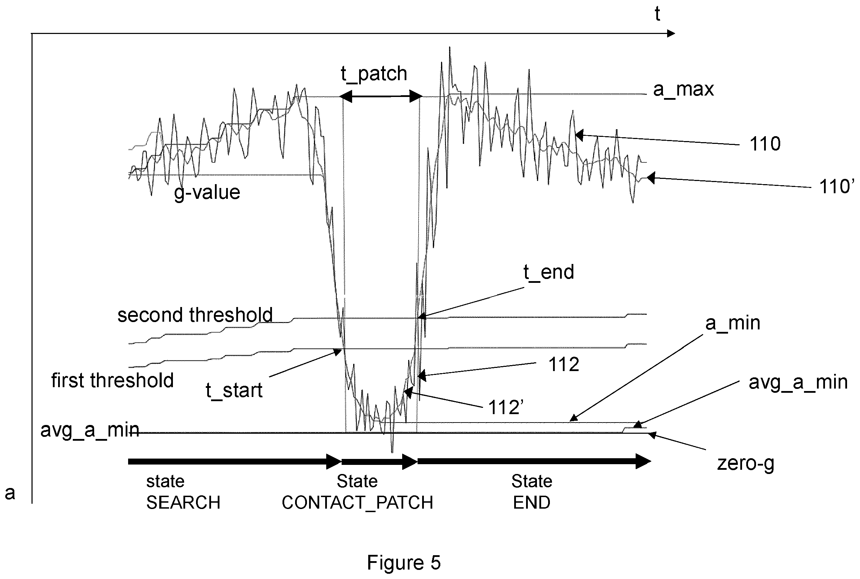

At block 34, the acceleration signal is filtered (see Fig 5). The data acquired by the TMS 2 during each revolution will have vibrational noise added to the acceleration data. In order to improve the ease of searching for, and determining, the impact signal, this noise is filtered using a moving average filter of length N, where N is the number of samples used in the filter. For example, a sampling frequency of 4 kHz, and a filter length of N=8 samples may be used. The moving average filter will "smooth" the data over e.g. the 8 samples such that the vibrational noise is mostly removed for each revolution of the tire. In order to filter the data, a FIFO buffer of length N may be used such that only the N samples plus the moving filter output value need to be stored in the memory 20. This is therefore the total amount of memory required by the operations of block 34.

The filtered data is then used in block 36. At block 36, the minimum of the impact signal (a_min), and maximum of the inter-impact acceleration data (a_max) are determined from the filtered data (see Fig 5). The amplitude (a_patch), i.e. a_min - a_max is also calculated. The data may be evaluated during processing to find maximum and minimum values to use for a_max and a_min for each revolution. The output of block 36 is then input to block 38. Alternatively, the a_max and a_min values for the revolution may be stored and input to block 38 and 40 for evaluation of the dynamic thresholds on the next revolution of the tire.

Block 38 evaluates the running average of a_min (avg_a_min) over multiple tire revolutions. Starting from a set fixed reset value, the running average avg_a_min is updated at fixed times, or for every tire revolution. The running average avg_a_min may be calculated as:

$$avg\_a\_min = (old\_a\_min + a\_min)/2,$$

wherein old_a_min is the previous running average of a_min, and a_min is the value of a_min for that one tire revolution.

One choice for the reset value is the zero-g value, which is the acceleration value obtained from the acceleration data from the sensor 2 when the tire is not moving. If the avg_a_min starts from the zero-g value, this allows for a rapid convergence of avg_a_min.

The zero-g value may be further used to determine a secondary, zero-offset parameter, which is defined as the difference between avg_a_min and the zero-g value:

$$zero\text{-}offset = avg\_a\_min - zero\text{-}g.$$

The zero-offset parameter may be used for load and wear estimations, and may therefore be transmitted to the server which can calculate load and wear. The zero-offset parameter is influenced by the sampling frequency of the analogue-to-digital converter in block 32, the filtering of the signal in block 34, and the deformation of the tire itself.

At block 40, a finite state machine (FSM) is implemented to determine the position of the sensor relative to the road surface, and the timings of the impact signal. The FSM has three main states:

SEARCH - the initial state, the TMS is not in the contact patch
CONTACT-PATCH - the TMS is in the contact patch
END - the final state, the TMS has left the contact patch

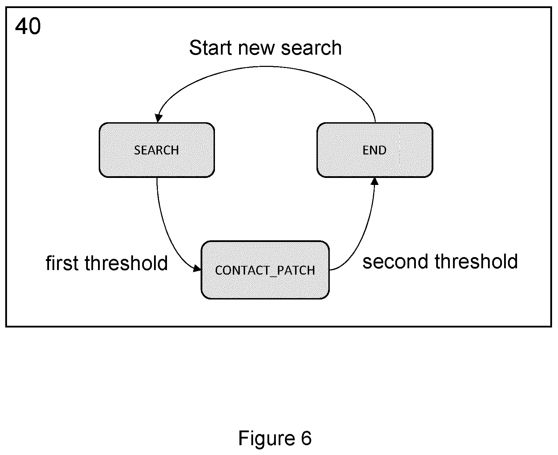

Determination of these states is further explained with reference to Figures 5 and 6 below.

At block 40, the timing of the impact signal is determined using a timer/clock. For example, a 4000 kHz sampling timer may be used to capture event timestamps (e.g. that of the impact signal); these timestamps will then be defined in terms of sampling clock counts. Any alternative method of measuring the time of the impact signal may also be used. The beginning of the impact signal (t_start) occurs at the beginning of the CONTACT_PATCH state, and the end of the impact signal (t_end) occurs at the beginning of the END state. The generated timestamps are then used in block 42 to evaluate the reliability of the generated impact signal "event". When the FSM reaches the END state, the data is passed to block 42.

At block 42, the start time of the previous impact signal (t_start_old) is stored in the memory 20. When, at block 40, the FSM generates a start-time of a new impact signal (t_start_new), at block 42, the difference between these two timestamps is evaluated:

$$Revolution\ time\ (t\_rev) = t\_start\_new - t\_start\_old$$

Once t_rev has been calculated, the processor 16 waits for a period of time after the END state has been generated in block 40 to acquire a data sample. The time period is a fraction of t_rev, such that the impact signal will have finished and the new sample will be obtained between impacts. This sample will be taken from the acceleration data between impacts, which is then converted to a g-value using a calibrated lookup table.

As the g-value is proportional to the inverse of the square of t_rev, an error function may be evaluated as:

$$error = g\text{-}value * (t\_rev)^2$$

This error value may then be compared to two calibrated thresholds MAX_ERROR and MIN_ERROR. If MIN_ERROR < error < MAX_ERROR, then t_rev is considered valid; otherwise it is considered invalid. The valid or invalid output is then forwarded to block 44.

At block 44, if a valid t_rev value was determined at block 42, this block collects the output of block 46 (explained below), along with a selection of the outputs from any of blocks 32-40. The selected data is then either sent to the memory 20 where it is stored, or to the transceiver 18 for transmission to the external server 14.

As an example, the data may be sent using a 433 MHz digital radio modulation, or stored in a FRAM memory, connected through an I2C bus. The data may also be sent using a BLE connection.

Alternatively, if an invalid t_rev value was determined at block 42, the data is discarded for that revolution.

Once the data has been stored/transmitted, a reset signal (shown by the dashed lines in Figure 4) is sent to block 40 to begin a search for a new impact signal, indicating a new contact patch.

Block 46 receives the output of blocks 32-40 and the processor 16 carries out a real-time assessment of the acceleration data, in order to extract useful features to estimate information on the tire and its interaction with the road surface and/or the vehicle.

As block 46 receives the values t_start and t_end from block 40, the duration of an impact signal (t_patch) can be determined as:

$$t\_patch = t\_end - t\_start.$$

The contact time ratio may also be determined as:

$$Ratio = t\_patch / t\_rev$$

The derivative of the impact signal 12 is calculated, and the maximum and minimum values of this derivative may be later used to evaluate the residual thread depth of the tire.

If there is insufficient power in the processor 16 to evaluate data at block 46, then the data received at block 46 from any of blocks 32-38 may be stored on a temporary memory and evaluated later after block 40. In such a case, the beginning of the FSM may be postponed until block 46 has completed the necessary calculations.

Figure 5 shows a diagram of raw acceleration data 110 acquired by the TMS 2 of Figure 1 as a function of time. An impact signal 112 is shown, induced in the acceleration data 110 for one revolution of the tire 6 fitted with the TMS 2. It will be appreciated that, in contrast to the acceleration data 10 of Figure 2, the raw acceleration data 110 of Figure 5 has vibrational noise.

Therefore, as explained in Figure 4, at block 34, the acceleration data 110 is filtered using a moving average filter of length N. This smooths the data, with the resultant smoothed acceleration data 110' shown overlaid over the acceleration data 110. As all the acceleration data acquired by the TMS 2 will be smoothed, the smoothed impact signal 112' is therefore also shown.

The values a_min, avg_a_min and a_max are shown in Figure 5, as already explained with reference to block 36 of Figure 4. It will be appreciated that a_min is the "peak" of the smoothed impact signal 112', and a_max is the "peak" of the smoothed acceleration data 110' between impact signals (the inter-impact peak).

The zero-g value is shown below the peak a_min. As explained above, zero-g is determined using the TMS 2 when the tire is not moving, and is used as a starting value for determining avg_a_min. Figure 5 shows how, before the impact signal 112', the moving average avg_a_min is equal to the zero-g value. Following the impact signal 112', as a new a_min value has been obtained, the running average avg_a_min changes and has a different value to zero-g after the impact. It will be appreciated therefore, that over multiple revolutions of the tire, that avg_a_min will converge to the a_min value.

The g_value is shown as the average inter-impact value for the smoothed acceleration data 110', which is used for determining the validity of the revolution data which is acquired by the TMS 2.

The impact signal 12 has a leading edge leading from the g_value between impacts to the peak of the impact signal at a_min, and then a trailing edge from a_min back to the g_value.

In order to trigger the FSM state changes of Figure 4 (block 40), the smoothed acceleration data 110' is compared to two dynamic thresholds which are defined as functions of the running average of avg_a_min, a_max, and fixed values x, y. There is a first threshold and a second threshold, as shown in Figure 5, with the first threshold having a value closer to avg_a_min than the second threshold. Example equations for these thresholds are set out below:

$$First\ threshold =\ (1-x)^*\ avg\_a\_min + x^*\ a\_max$$

$$\approx avg\_a\_min - (a\_min - a\_max)^*x$$

$$= avg\_a\_min - amplitude^*x$$

$$\text{Second threshold} = (1-y)* \text{avg\_a\_min} + y* \text{a\_max}$$

$$\approx \text{avg\_a\_min} - (\text{a\_min} - \text{a\_max})*y$$

$$= \text{avg\_a\_min} - \text{amplitude}*y$$

Wherein the amplitude is defined as a_min - a_max i.e. the total displacement of the acceleration data 110', and 0 < x, y <1, and x < y.

The dynamic first and second thresholds therefore change based on the running average avg_a_min, and a_max. These values will be altered by factors such as the load on the tires and the speed of revolution of the tires.

The t_start of the impact signal 112' is defined when the acceleration data 110' crosses the first threshold, and the FSM changes state from SEARCH to CONTACT-PATCH when this threshold condition is met. The t_end of the impact signal is defined when the acceleration data 110' crosses the second threshold, and the FSM changes state from CONTACT_PATCH to END. The general operation of the FSM in block 40 is illustrated in Figure 6.

Figure 5 has arrows showing where the first and second thresholds are used to define the start time and end time of the impact signal. It will be appreciated that the first threshold is used to define the beginning (t_start) of the impact signal 112' on the leading edge of the peak, and second threshold is used to define the end (t_end) of the impact signal 112' on the trailing edge of the peak.

The zero-offset value before the impact signal 112' is zero, as avg_a_min and zero-g are equal. However, after the impact signal 112', as avg_a_min and zero-g are no longer equal, the zero offset value will have a magnitude equal to the difference between avg_a_min and zero-g.

Figure 6 is a diagram of the FSM which is used in block 40 to determine the t_start and t_end of the impact signal 112' from the dynamic first and second thresholds. It is clear from Figure 6 the continuous process of the FSM to determine the start and end of the CONTACT_PATCH state, with a new search begun after the end of each impact signal 112' has been determined. As the tire on which the TSM is mounted will continuously spin whilst the vehicle is moving, this allows multiple impact signals over multiple revolutions to be analysed.

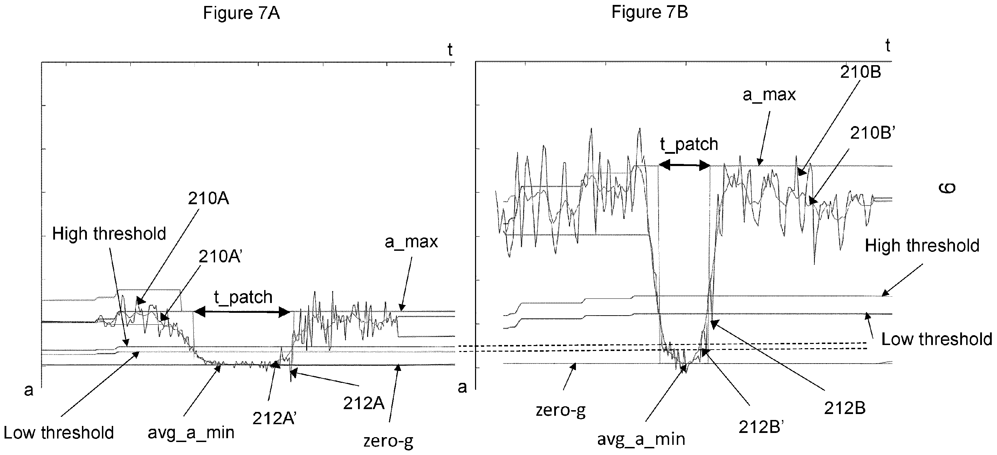

Figures 7A and 7B show acceleration data for a single revolution of a fully worn tire, with a full load, at two different speeds. Figure 7A shows the acceleration data 210A for a tire of a vehicle travelling at 30 km/h, and Figure 7B shows acceleration data 210B for a tire of a vehicle travelling at 60 km/h. As with the data shown in Figure 5, the acceleration data 210A, 210B is filtered to produce the smoothed acceleration data 210A', 210B'.

The acceleration data 210A', from the vehicle travelling at 30km/h, is flattened compared to the acceleration data 210B', with a flatter and wider impact signal 212A', such that t_patch in Figure 7A is longer than t_patch in Figure 7B. a_max at 60 km/h in Figure 7B is much higher than a_max at 30 km/h in Figure 7A.

In both Figures 7A and 7B, avg_a_min is the same, and approximately equal to the zero-g value, such that the zero-offset is ~zero. However the first and second dynamic thresholds of Figure 7A are different to those of Figure 7B, due to the differences in a_max for the two speeds. The first and second thresholds of Figure 7A are shown with dashed lines on Figure 7B, and it is clear how the thresholds have changed due to the increased a_max caused by the higher speed of rotation of the tire. When the tire is rotating more quickly, as in Figure 7B, the impact signal 212B' is much shorter because each portion of the tire will be in contact with the road for a shorter period of time when rotating at a higher speed. The higher speed also means the radial acceleration measured by the TMS 2 is higher (as the tire must be rotating more quickly), and the value of a_max is therefore larger at higher speeds. The impact signal 212B' therefore has a greater amplitude (a_patch) than the impact signal 212A'.

It is clear in both Figures 7A and 7B that the first and second dynamic thresholds change over time, as a_max changes. Therefore, as a_max increases, the first and second thresholds in both Figures 7A and 7B similarly increase.

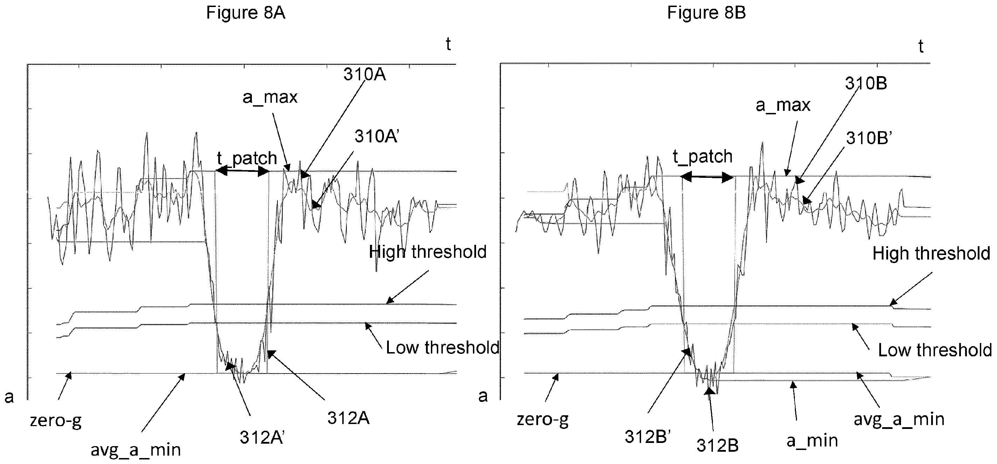

Figures 8A and 8B show acceleration data for a single revolution of a tire with a full load, travelling at 60 km/h. Figure 8A shows the acceleration data 310A for a tire of a vehicle where the tire is fully worn, and Figure 8b shows acceleration data 310B for a new tire (i.e. 100% remaining tread depth). As with the data shown in Figure 5, the acceleration data 310A, 310B is filtered to produce the smoothed acceleration data 310A', 310B'.

The acceleration data 310A' and 310B' are similarly shaped, with a high amplitude impact signal 312A', 312B'. t_patch in Figure 8A is very similar to t_patch in Figure 8B. a_max is similar for both Figures 8A and 8B, as the tires are travelling at the same speeds and with the same load.

The raw acceleration data 310A is much noisier than the raw acceleration data 310B. This may be as the fully worn tire will be less able to absorb vibrational noise compared to the new tire. Variable road conditions may also affect how noisy the raw acceleration data is.

It can be seen from Figures 8A and 8B that the value avg_a_min for the impact signal 312B' is lower than avg_a_min for 312A', and is below the zero-g value, such that the zero-offset value will be lower than the zero-g value. However, avg_a_min in Figure 8A is approximately equal to the zero-g value such that the zero-offset is ~ zero.

The first and second dynamic thresholds for both Figures 8A and 8B are very similar, due to the similar values of a_max and avg_a_min prior to the impact signals 312A', 312B'. It will be appreciated however, that after the impact in Figure 8B, the dynamic thresholds reduce, due to the lower avg_a_min for the new tire in Figure 8B, whereas the thresholds in Figure 8A remain unchanged after the impact.

The impact signal 312B' in Figure 8B has a different shape to the impact signal 312A' in Figure 8A. Therefore, the slopes in both figures 8A and 8B may be evaluated by differentiating the acceleration data with respect to time in order to estimate the wear of the tires. The differential with respect to time of the signals 312A' and 312B' may be calculated at block 46 in Figure 4, with the maximum and minimum value of this differential obtained over multiple revolutions, using a moving average, for example with a filter length N=8.

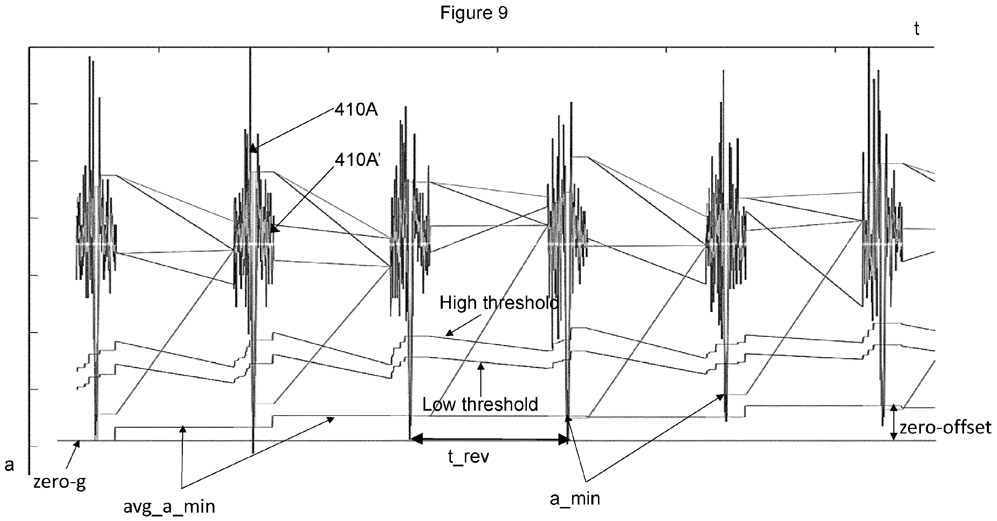

Figure 9 shows acceleration data 410 for a fully worn tire with no load over multiple revolutions of the tire. As with Figure 5, the raw acceleration data 410 is smoothed using a moving average filter to produce the smoothed acceleration data 410'. The speed of the tire may vary over the revolutions shown in Figure 9. avg_a_min and a_max vary over the revolutions in Figure 9, shown by the changing high and low thresholds over the revolutions. It is clear in Figure 9 how a_min adapts over several revolutions of the tire to adapt to the current conditions of the tire e.g. speed, load, etc.

At the beginning of the first revolution, avg_a_min is equal to the zero-g value. However, a_min for the first revolution is higher than zero-g, and therefore avg_a_min increases after the first revolution. Similarly, avg_a_min also increases after the second and fifth revolutions due to the a_min value for each of those revolutions. It is therefore clear, how over multiple revolutions, avg_a_min converges on a_min, and the zero-offset value increases.

All values which are obtained from the acceleration data shown in the Figures above may be sent to the server for further analysis such as tire tread depth estimation, speed estimation, or load estimation.

While the invention has been described in detail in connection with only a limited number of embodiments, it should be readily understood that the invention is not limited to such disclosed embodiments. For example, a high load has a similar effect on the acceleration data compared to a low load vehicle, as low speed has on acceleration data compared to a high speed vehicle.

The invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A method for measuring impact signals (12) over a plurality of revolutions of a tire (6) that rolls on a road surface (8), the impact signals (12) being induced in radial acceleration data (10) measured by a tire mounted sensor (TMS) (2) comprising an accelerometer (4) mounted in the tire (6) at a contact patch coming into contact with the road surface (8) with each revolution of the tire (6), the method comprising:
   acquiring the radial acceleration data (10) over a plurality of revolutions of the tire (6) and processing the radial acceleration data (10) at the sensor (2), wherein processing the radial acceleration data (10) at the sensor (2) comprises:

   processing the radial acceleration data (10) to measure radial acceleration values for each impact signal (12) and calculate an impact peak radial acceleration value (a_min);
   calculating a running average of the impact peak radial acceleration value (avg_a_min) over the plurality of revolutions of the tire (6);
   measuring a start time and an end time of each impact signal by comparing radial acceleration values of the radial acceleration data (10) to a dynamic threshold, wherein the dynamic threshold is adjusted dependent on the running average of the impact peak radial acceleration value (avg_a_min); and
   generating, from the measured start time and end time of each impact signal (12), a time-related parameter chosen from one or more of: a duration of an impact signal (t_patch), a time period between two consecutive impact signals (t_rev), and a ratio between the duration (t_patch) and the time period (t_rev);
   the method further comprising transmitting the time-related parameter to an external server (14).

2. The method of claim 1 further comprising: processing the radial acceleration data (10) to measure radial acceleration values between impact signals and calculate an inter-impact peak radial acceleration value (a_max).

3. The method of claim 2 further comprising: adjusting the dynamic threshold dependent on the inter-impact peak radial acceleration value (a_max).

4. The method of claim 2 or 3 wherein the dynamic threshold comprises a first dynamic threshold used to measure the start time of the impact signal and a second dynamic threshold used to measure the end time of the impact signal.

5. The method of claim 4 wherein calculating the first dynamic threshold uses a function of: avg_a_min; a_max; and a factor x, wherein x is a fixed value satisfying $0<x<1$.

6. The method of claim 4 or 5 wherein calculating the second dynamic threshold uses a function of: avg_a_min; a_max; and a factor y, wherein y is a fixed value satisfying $0 < y < 1$ and $y \neq x$.

7. The method of any preceding claim further comprising: processing the radial acceleration data (10) to measure radial acceleration values between impact signals and calculate an average radial acceleration value between impact signals as a g-value.

8. The method of any preceding claim further comprising: checking whether the generated time-related parameter is valid by comparing the value of g-value*( t_rev)^2 to an expected error value range.

9. The method of any preceding claim further comprising: measuring a zero-g value for the tire by processing the radial acceleration data (10) to measure radial acceleration values when the tire is not moving; and processing the radial acceleration data (10), for each impact signal, to measure a zero offset in the radial acceleration values, which is calculated as the difference between the running average of the peak radial acceleration value (avg_a_min) and the zero-g value.

10. The method of any of claims 2-9 wherein the difference between the impact peak radial acceleration value (a_min) and the inter-impact peak radial acceleration value (a_max) is averaged over a plurality of revolutions of a tire (6) to measure a contact patch amplitude (a_patch), and the contact patch amplitude is transmitted to the external server (14).

11. The method of any of claims 2-9 further comprising: processing the radial acceleration data (10), for each impact, to determine the slope of at least one of the leading edge and trailing edge of the impact signal.

12. The method of claim 11 further comprising:

transmitting to the external server (14) an amplitude-related parameter for each impact chosen from one or more of: the impact peak radial acceleration value (a_min), the inter-impact peak radial acceleration value (a_max), the slope, and the difference between a_min and a_max; and
optionally receiving the amplitude-related parameter at the external server (14) and using the amplitude-related parameter to determine tire wear.

13. The method of any preceding claim further comprising: receiving the time-related parameter at the external server (14) and using the time-related parameter to determine one or more of: (i) tire load; (ii) vehicle centre of gravity; and (iii) rotational speed of the tire.

14. A tire-mounted sensor system (2) for measuring impact signals (12) over a plurality of revolutions of a tire (6) that rolls on a road surface (8), the impact signals (12) being induced in radial acceleration data (10) measured by an accelerometer (4) of the the tire-mounted sensor system (2) mounted in the tire (6) at a contact patch coming into contact with the road surface (8) with each revolution of the tire (6), the tire-mounted sensor system (2) comprising a processor (16), transmitter (18), and accelerometer (4), wherein the accelerometer (4) acquires the radial acceleration data over a plurality of revolutions of the tire (6), and the processor (16):
processes the radial acceleration data (10) to measure radial acceleration values for each impact signal and calculate an impact peak radial acceleration value (a_min);

calculates a running average of the impact peak radial acceleration value (avg_a_min) over the plurality of revolutions of the tire (6);
measures a start time and an end time of each impact signal (12) by comparing radial acceleration values of the radial acceleration data (10) to a dynamic threshold, wherein the dynamic threshold is adjusted dependent on the running average of the impact peak radial acceleration value (avg_a_min); and
generates, from the measured start time and end time of each impact signal, a time-related parameter chosen from one or more of: a duration of an impact signal (t_patch), a time period between two consecutive impact signals (t_rev), and a ratio between the duration (t_patch) and the time period (t_rev); and

wherein the transmitter (18) transmits the time-related parameter to an external server.

**Patentansprüche**

1. Verfahren zum Messen von Aufprallsignalen (12) über eine Vielzahl von Umdrehungen eines Reifens (6), der auf einer Straßenoberfläche (8) rollt, wobei die Aufprallsignale (12) in Daten radialer Beschleunigung (10) induziert werden, die von einem reifenmontierten Sensor (TMS) (2) gemessen werden, der einen Beschleunigungsmesser (4) umfasst, der in dem Reifen (6) an einer Aufstandsfläche montiert ist, die bei jeder Umdrehung des Reifens (6) mit der Straßenoberfläche (8) in Kontakt kommt, wobei das Verfahren umfasst:
Erfassen der Daten radialer Beschleunigung (10) über eine Vielzahl von Umdrehungen des Reifens (6) und Verarbeiten der Daten radialer Beschleunigung (10) an dem Sensor (2), wobei das Verarbeiten der Daten radialer Beschleunigung (10) an dem Sensor (2) umfasst:

   Verarbeiten der Daten radialer Beschleunigung (10), um Werte radialer Beschleunigung für jedes Aufprallsignal (12) zu messen und einen Wert radialer Beschleunigung für die Aufprallspitze (a_min) zu berechnen;
   Berechnen eines gleitenden Durchschnitts des Werts radialer Beschleunigung für die Aufprallspitze (avg_a_min) über die Vielzahl von Umdrehungen des Reifens (6);
   Messen einer Startzeit und einer Endzeit jedes Aufprallsignals durch Vergleichen von Werten radialer Beschleunigung der Daten radialer Beschleunigung (10) mit einem dynamischen Schwellenwert, wobei der dynamische Schwellenwert in Abhängigkeit von dem gleitenden Durchschnitt des Werts radialer Beschleunigung für die Aufprallspitze (avg_a_min) angepasst wird; und
   Erzeugen, aus der gemessenen Startzeit und Endzeit jedes Aufprallsignals (12), eines zeitbezogenen Parameters ausgewählt aus einem oder mehreren von: einer Dauer eines Aufprallsignals (t_patch), einer Zeitspanne zwischen zwei aufeinanderfolgenden Aufprallsignalen (t_rev) und einem Verhältnis zwischen der Dauer (t_patch) und der Zeitspanne (t_rev);
   wobei das Verfahren weiter das Übertragen des zeitbezogenen Parameters an einen externen Server (14) umfasst.

2. Verfahren nach Anspruch 1, weiter umfassend: Verarbeiten der Daten radialer Beschleunigung (10), um Werte radialer Beschleunigung zwischen Aufprallsignalen zu messen und einen Wert radialer Beschleunigung zwischen den Aufprallspitzen (a_max) zu berechnen.

3. Verfahren nach Anspruch 2 weiter umfassend: Anpassen des dynamischen Schwellenwerts in Abhängigkeit von dem Wert radialer Beschleunigung zwischen den Aufprallspitzen (a_max).

4. Verfahren nach Anspruch 2 oder 3, wobei der dynamische Schwellenwert einen ersten dynamischen Schwellenwert umfasst, der zum Messen der Startzeit des Aufprallsignals verwendet wird, und einen zweiten dynamischen Schwellenwert, der zum Messen der Endzeit des Aufprallsignals verwendet wird.

5. Verfahren nach Anspruch 4, wobei das Berechnen des ersten dynamischen Schwellenwerts eine Funktion verwendet von: avg_a_min, a_max und einem Faktor x, wobei x ein fester Wert ist, der $0 < x < 1$ erfüllt.

6. Verfahren nach Anspruch 4 oder 5, wobei das Berechnen des zweiten dynamischen Schwellenwerts eine Funktion verwendet von: avg_a_min, a_max und einem Faktor y, wobei y ein fester Wert ist, der $0 < x < 1$ und $y \neq x$ erfüllt.

7. Verfahren nach einem vorstehenden Anspruch, weiter umfassend: Verarbeiten der Daten radialer Beschleunigung (10), um Werte radialer Beschleunigung zwischen Aufprallsignalen zu messen und einen durchschnittlichen Wert radialer Beschleunigung zwischen Aufprallsignalen als einen g-Wert zu berechnen.

8. Verfahren nach einem vorstehenden Anspruch, weiter umfassend: Überprüfen, ob der erzeugte zeitbezogene Parameter gültig ist, indem der Wert von g-Wert*(t_rev)^2 mit einem erwarteten Fehlerwertbereich verglichen wird.

9. Verfahren nach einem vorstehenden Anspruch, weiter umfassend: Messen eines Null-g-Werts für den Reifen durch Verarbeiten der Daten radialer Beschleunigung (10) zum Messen von Werten radialer Beschleunigung, wenn sich der Reifen nicht bewegt; und Verarbeiten der Daten radialer Beschleunigung (10) für jedes Aufprallsignal zum Messen eines Null-Offsets in den Werten radialer Beschleunigung, der als die Differenz zwischen dem gleitenden Durchschnitt des Werts radialer Beschleunigung für die Spitze (avg_a_min) und dem Null-g-Wert berechnet wird.

10. Verfahren nach einem der Ansprüche 2-9, wobei die Differenz zwischen dem Wert radialer Beschleunigung für die Aufprallspitze (a_min) und dem Wert radialer Beschleunigung zwischen den Aufprallspitzen (a_max) über eine Vielzahl von Umdrehungen eines Reifens (6) gemittelt wird, um eine Aufstandsflächenamplitude (a_patch) zu messen, und die Aufstandsflächenamplitude an den externen Server (14) übertragen wird.

11. Verfahren nach einem der Ansprüche 2-9, weiter umfassend: Verarbeiten der Daten radialer Beschleunigung (10) für jeden Aufprall, um die Steigung mindestens einer der Vorderkante und Hinterkante des Aufprallsignals zu bestimmen.

12. Verfahren nach Anspruch 11, weiter umfassend:

Übertragen, an den externen Server (14), eines amplitudenbezogenen Parameters für jeden Aufprall, ausgewählt aus einem oder mehreren von: dem Wert radialer Beschleunigung für die Aufprallspitze (a_min), dem Wert radialer Beschleunigung zwischen den Aufprallspitzen (a_max), der Steigung und der Differenz zwischen a_min und a_max; und
optionales Empfangen des amplitudenbezogenen Parameters an dem externen Server (14) und Verwenden des amplitudenbezogenen Parameters zum Bestimmen des Reifenverschleißes.

13. Verfahren nach einem vorstehenden Anspruch, weiter umfassend: Empfangen des zeitbezogenen Parameters an dem externen Server (14) und Verwenden des zeitbezogenen Parameters zum Bestimmen eines oder mehrerer von: (i) Reifenlast; (ii) Fahrzeugschwerpunkt; und (iii) Drehgeschwindigkeit des Reifens.

14. Reifenmontiertes Sensorsystem (2) zum Messen von Aufprallsignalen (12) über eine Vielzahl von Umdrehungen eines Reifens (6), der auf einer Straßenoberfläche (8) rollt, wobei die Aufprallsignale (12) in Daten radialer Beschleunigung (10) induziert werden, die von einem Beschleunigungsmesser (4) des reifenmontierten Sensorsystems (2) gemessen werden, der in dem Reifen (6) an einer Aufstandsfläche montiert ist, die bei jeder Umdrehung des Reifens (6) mit der Straßenoberfläche (8) in Kontakt kommt, wobei das reifenmontierte Sensorsystem (2) einen Prozessor (16), einen Sender (18) und einen Beschleunigungsmesser (4) umfasst, wobei der Beschleunigungsmesser (4) die Daten radialer Beschleunigung über eine Vielzahl von Umdrehungen des Reifens (6) erfasst, und der Prozessor (16):

die Daten radialer Beschleunigung (10) verarbeitet, um Werte radialer Beschleunigung für jedes Aufprallsignal zu messen und einen Wert radialer Beschleunigung für die Aufprallspitze (a_min) zu berechnen;
einen gleitenden Durchschnitt des Werts radialer Beschleunigung für die Aufprallspitze (avg_a_min) über die Vielzahl von Umdrehungen des Reifens (6) berechnet;
eine Startzeit und eine Endzeit jedes Aufprallsignals (12) misst, indem er die Werte radialer Beschleunigung der Daten radialer Beschleunigung (10) mit einem dynamischen Schwellenwert vergleicht, wobei der dynamische Schwellenwert in Abhängigkeit von dem gleitenden Durchschnitt des Werts radialer Beschleunigung für die Aufprallspitze (avg_a_min) angepasst wird; und
aus der gemessenen Startzeit und Endzeit jedes Aufprallsignals einen zeitbezogenen Parameter erzeugt, der ausgewählt ist aus einem oder mehreren von: einer Dauer eines Aufprallsignals (t_patch), einer Zeitspanne zwischen zwei aufeinanderfolgenden Aufprallsignalen (t_rev) und einem Verhältnis zwischen der Dauer (t_patch) und der Zeitspanne (t_rev); und
wobei der Sender (18) den zeitbezogenen Parameter an einen externen Server überträgt.

## Revendications

1. Procédé pour mesurer des signaux d'impact (12) sur une pluralité de tours d'un pneu (6) roulant sur une chaussée (8), les signaux d'impact (12) étant induits dans des données d'accélération radiale (10) mesurées par un capteur monté sur pneu (TMS) (2) comprenant un accéléromètre (4) monté dans le pneu (6) au niveau d'une surface de contact venant en contact avec la chaussée (8) à chaque tour du pneu (6), le procédé comprenant :
l'acquisition des données d'accélération radiale (10) sur une pluralité de tours du pneu (6) et le traitement des données d'accélération radiale (10) au niveau du capteur (2), dans lequel le traitement des données d'accélération radiale (10) au niveau du capteur (2) comprend :

le traitement des données d'accélération radiale (10) pour mesurer des valeurs d'accélération radiale pour chaque signal d'impact (12) et calculer une valeur d'accélération radiale de pic d'impact (a_min) ;

le calcul d'une moyenne glissante de la valeur d'accélération radiale de pic d'impact (avg_a_min) sur la pluralité de tours du pneu (6) ;

la mesure d'un instant de début et d'un instant de fin de chaque signal d'impact en comparant des valeurs d'accélération radiale des données d'accélération radiale (10) à un seuil dynamique, dans lequel le seuil dynamique est ajusté en fonction de la moyenne glissante de la valeur d'accélération radiale de pic d'impact (avg_a_min) ; et

la génération, à partir de l'instant de début et de l'instant de fin mesurés de chaque signal d'impact (12), d'un paramètre temporel choisi parmi un ou plusieurs parmi : une durée d'un signal d'impact (t_patch), une période de temps entre deux signaux d'impact consécutifs (t_rev), et un rapport entre la durée (t_patch) et la période de temps (t_rev) ;

le procédé comprenant en outre la transmission du paramètre temporel à un serveur externe (14).

2. Procédé selon la revendication 1 comprenant en outre : le traitement des données d'accélération radiale (10) pour mesurer des valeurs d'accélération radiale entre des signaux d'impact et calculer une valeur d'accélération radiale de pic inter-impact (a_max).

3. Procédé selon la revendication 2 comprenant en outre : l'ajustement du seuil dynamique en fonction de la valeur d'accélération radiale de pic inter-impact (a_max).

4. Procédé selon la revendication 2 ou la revendication 3 dans lequel le seuil dynamique comprend un premier seuil dynamique utilisé pour mesurer l'instant de début du signal d'impact et un second seuil dynamique utilisé pour mesurer l'instant de fin du signal d'impact.

5. Procédé selon la revendication 4 dans lequel le calcul du premier seuil dynamique utilise une fonction de : avg_a_min ; a_max ; et un facteur x, dans lequel x est une valeur fixe satisfaisant $0 < x < 1$.

6. Procédé selon la revendication 4 ou la revendication 5 dans lequel le calcul du second seuil dynamique utilise une fonction de : avg_a_min ; a_max ; et un facteur y, dans lequel y est une valeur fixe satisfaisant $0 < y < 1$ et $y \neq x$.

7. Procédé selon l'une quelconque des revendications précédentes, comprenant en outre : le traitement des données d'accélération radiale (10) pour mesurer des valeurs d'accélération radiale entre des signaux d'impact et calculer une valeur d'accélération radiale moyenne entre des signaux d'impact en valeur de g.

8. Procédé selon l'une quelconque des revendications précédentes, comprenant en outre : le fait de vérifier si le paramètre temporel généré est valide en comparant la valeur de valeur de $g*(t\_rev)^2$ à une plage de valeurs d'erreur attendue.

9. Procédé selon l'une quelconque des revendications précédentes comprenant en outre : la mesure d'une valeur de zéro g pour le pneu par le traitement des données d'accélération radiale (10) pour mesurer des valeurs d'accélération radiale lorsque le pneu n'est pas en mouvement ; et le traitement des données d'accélération radiale (10), pour chaque signal d'impact, pour mesurer un décalage de zéro dans les valeurs d'accélération radiale, qui est calculé comme la différence entre la moyenne glissante de la valeur d'accélération radiale de pic (avg_a_min) et la valeur de zéro g.

10. Procédé selon l'une quelconque des revendications 2 à 9, dans lequel la différence entre la valeur d'accélération radiale de pic d'impact (a_min) et la valeur d'accélération radiale de pic inter-impact (a_max) est moyennée sur une pluralité de tours d'un pneu (6) pour mesurer une amplitude de surface de contact (a_patch), et l'amplitude de surface de contact est transmise au serveur externe (14).

11. Procédé selon l'une quelconque des revendications 2 à 9, comprenant en outre : le traitement des données d'accélération radiale (10), pour chaque impact, pour déterminer la pente d'au moins l'un parmi le bord d'attaque et le bord de fuite du signal d'impact.

12. Procédé selon la revendication 11 comprenant en outre :

la transmission au serveur externe (14) d'un paramètre lié à l'amplitude pour chaque impact choisi parmi un ou plusieurs parmi : la valeur d'accélération radiale de pic d'impact (a_min), la valeur d'accélération radiale de pic inter-impact (a_max), la pente et la différence entre a_min et a_max ; et

facultativement, la réception du paramètre lié à l'amplitude au niveau du serveur externe (14) et l'utilisation du paramètre lié à l'amplitude pour déterminer l'usure de pneu.

13. Procédé selon l'une quelconque des revendications précédentes, comprenant en outre : la réception du paramètre temporel au niveau du serveur externe (14) et l'utilisation du paramètre temporel pour déterminer un ou plusieurs parmi : (i) la charge de pneu ; (ii) le centre de gravité de véhicule ; et (iii) la vitesse de rotation du pneu.

14. Système de capteur monté sur pneu (2) pour mesurer des signaux d'impact (12) sur une pluralité de tours d'un pneu (6) qui roule sur une chaussée (8), les signaux d'impact (12) étant induits dans des données d'accélération radiale (10) mesurées par un accéléromètre (4) du système de capteur monté sur pneu (2) monté dans le pneu (6) au niveau d'une surface de contact venant en contact avec la chaussée (8) à chaque tour du pneu (6), le système de capteur monté sur pneu (2) comprenant un processeur (16), un émetteur (18) et un accéléromètre (4), dans lequel l'accéléromètre (4) acquiert les données d'accélération radiale sur une pluralité de tours du pneu (6), et le processeur (16) :

traite les données d'accélération radiale (10) pour mesurer des valeurs d'accélération radiale pour chaque signal d'impact et calculer une valeur d'accélération radiale de pic d'impact (a_min) ;

calcule une moyenne glissante de la valeur d'accélération radiale de pic d'impact (avg_a_min) sur la pluralité de tours du pneu (6) ;

mesure un instant de début et un instant de fin de chaque signal d'impact (12) en comparant des valeurs d'accélération radiale des données d'accélération radiale (10) à un seuil dynamique, dans lequel le seuil dynamique est ajusté en fonction de la moyenne glissante de la valeur d'accélération radiale de pic d'impact (avg_a_min) ; et

génère, à partir de l'instant de début et de l'instant de fin mesurés de chaque signal d'impact, un paramètre temporel choisi parmi un ou plusieurs parmi : une durée d'un signal d'impact (t_patch), une période de temps entre deux signaux d'impact consécutifs (t_rev), et un rapport entre la durée (t_patch) et la période de temps (t_rev) ; et

dans lequel l'émetteur (18) transmet le paramètre temporel à un serveur externe.

Figure 1

Figure 2

EP 4 140 782 B1

TMS 2

| Processor 16 | Acceleration sensor 4 |
| Transceiver 18 | Battery 22 |
| Memory 20 | |

Server 14

| Processor 24 |
| Transceiver 26 |
| Memory 28 |

Figure 3

Figure 4

Figure 5

Figure 6

Figure 7A

Figure 7B

Figure 8A

Figure 8B

Figure 9

EP 4 140 782 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180222458 A1
- WO 2020128278 A1
- EP 3206056 A1
- US 20210208029 A
- WO 2009008502 A